# EUROPÄISCHE PATENTANMELDUNG

(11) **EP 1 101 662 A2**
(43) Veröffentlichungstag der Anmeldung: **23.05.2001**
(21) Anmeldenummer: 00121928.6
(22) Anmeldetag: 09.10.2000
(51) Int. Cl.: B60R 21/20

(54) **Lenkrad schwingungstilgender wirkender Airbaggasgenerator**

(30) Priorität: 18.11.1999 DE 19955427
(71) Anmelder: Firma Carl Freudenberg, 69469 Weinheim (DE)
(72) Erfinder: Grunau, Rudi, Dr., 79395 Neuenburg (DE); Back, Friedrich, 79379 Müllheim (DE); Dürre, Markus, 79379 Müllheim (DE)

(57) **Zusammenfassung**

Airbaggehäuse in einem Kraftfahrzeuglenkrad mit einem als Lenkrad-Schwingungstilger wirkenden Airbag-Gasgenerator, wobei der Gasgenerator (5) mit dem Airbaggehäuse (1) gasdicht über einen Einsatz (15) mit einer längs der Lenkradachse (19) verlaufenden ringförmigen Gummimembran (16) verbunden ist.

## Beschreibung

### Technisches Gebiet

Bei Kraftfahrzeuglenkrädern besteht die Möglichkeit, daß zumindest in bestimmten Geschwindigkeitsbereichen am Lenkrad Schwingungen auftreten können. Diese Schwingungen mindern den Fahrkomfort. Es ist deshalb üblich, entweder direkt an der Lenksäule oder im Lenkrad unterhalb des Airbaggehäuses einen Schwingungstilger anzubringen.

### Stand der Technik

Aus der DE 39 25 761 A1 ist es bekannt, das gesamte Airbagmodul als Schwingungstilger zu verwenden. Das Airbagmodul besteht aus einem Gehäuse für den Airbag und einem mit dem Gehäuse starr verbundenen Gasgenerator. Über elastische Mittel ist das Airbagmodul mit der Lenkradsäule verbunden. Behandelt wird in der Fig. 3 eine alternative Ausführungsform, bei der der Gasgenerator durch elastische Mittel mit dem Lenkradkörper verbunden ist und die Trägermasse für den Schwingungstilger bildet. Bei dieser Anordnung besteht jedoch das Problem, daß an den Befestigungsstellen von Gasgenerator und Airbaggehäuse ein Spalt vorhanden ist, durch den die Explosionsgase bei der Auslösung des Gasgenerators entweichen können.

Eine andere Möglichkeit den Gasgenerator als Schwingungstilger zu verwenden, ist in dem Gebrauchsmuster DE 298 16 923 U1 gezeigt. Dort wird der Gasgenerator über ein elastisch verformbares Element im Airbagmodul gelagert. Über gesonderte Blechteile wird das aus Gummi bestehende Element zusammengedrückt und schließt dabei den Befestigungsflansch des Gasgenerators ein. Das Gummielement umfaßt den Gasgenerator umlaufend, so daß Befestigungsöffnungen, aus denen Gas austreten könnte, nicht vorhanden sind. Die Ausführungsform hat jedoch den Nachteil einer aufwendigen Montage, zumal wenn der innere Rand des Gassacks von den Blechteilen mit erfaßt werden soll oder gesonderte Halteelemente vorgesehen sind.

Eine weitere Möglichkeit ist durch das Gebrauchsmuster DE 299 02 033 O1 gegeben, in dem ein Montagezylinder aus elastischem Werkstoff vorgesehen ist, dessen freie Ränder einerseits mit einem auf dem Gasgenerator aufgesetzten Montageflansch und andererseits mit einem gesonderten Montageblech verbunden sind. Die Verbindung der Ränder des Montagezylinders mit dem Montageblech und dem Montageflansch erfolgt durch Vulkanisieren. Fertigungstechnisch ist diese Lösung nur schwer zu realisieren.

### Darstellung der Erfindung

Der Erfindung liegt die Aufgabe zugrunde, das Airbaggehäuse mit einem Gasgenerator als Schwingungstilger so auszubilden, daß eine möglichst optimale Schwingungstilgung erreicht wird und gleichzeitig eine kostengünstige Fertigung und Montage möglich ist.

Die Lösung der gestellten Aufgabe wird bei einem Airbaggehäuse der eingangs genannten Gattung erfindungsgemäß dadurch erreicht, daß der Gasgenerator mit dem Airbaggehäuse gasdicht über einen Einsatz mit einer längs der Lenkradachse verlaufenden, ringförmigen Gummimembran verbunden ist. Es ist folglich ein gesonderter Einsatz vorgesehen, der gasdicht sowohl mit dem Gasgenerator als auch mit dem Airbaggehäuse verbunden wird. Der Einsatz kann als ein vom Generator und Airbaggehäuse separates Teil hergestellt, was seine Fertigung erheblich erleichtert, und während der Montage mit dem Generator und dem Airbaggehäuse verbunden werden.

Eine mögliche Ausgestaltung des Einsatzes sieht vor, daß der Einsatz aus einem am Befestigungsflansch der Generatorgehäuses ansetzbaren Adapterelement, das mit seinem äußeren Rand an einem Ende der Gummimembran anschließt, und einem an das Airbaggehäuse anfügbaren Anschlußblech, das mit seinem inneren Rand an das andere Ende des Gummimembran angreift, besteht. Der Einsatz besteht somit im wesentlichen aus drei Teilen, nämlich dem Adapterelement, dem Anschlußblech und der dazwischen liegenden Gummimembran. Adapterelement und Anschlußblech werden durch Vulkanisation an die Gummimembran angefügt. Die Verbindung von Adapterelement und Befestigungsflansch des Generatorgehäuses als auch des Anschlußbleches mit dem Airbaggehäuse kann durch Schraubverbindungen erfolgen.

Es ist zweckmäßig wenn das Adapterelement durch einen senkrecht zur Lenkradachse ausgebildeten Ringflansch gebildet ist. Ein solcher Ringflansch ist an den Befestigungsflansch des Generatorgehäuses angepaßt und wird daran durch geeignete Mittel angeschraubt oder auch auf andere Weise befestigt.

Möglich ist aber auch den Ringflansch mit einem umlaufenden rohrartigen Ansatz zu versehen, der einen radial nach außen vorstehenden Rand hat, mit dem er mit der Gummimembran verbunden ist. Die Ausbildung des Ringflansches richtet sich nach der Ausbildung des Befestigungsflansches am Generatorgehäuse und an der gewünschten Ausgestaltung der Gummimembran, die bevorzugt kegelstumpfförmig ausgebildet ist. Je nach dem, ob der Kegelstumpf nach oben oder nach unten sich erweitert, erfolgt die entsprechende Auswahl des Ringflansch.

Das Anschlußblech für die Verbindung der Gummimembran mit dem Airbaggehäuse kann ebenfalls als Ringflansch ausgestaltet sein und dabei senkrecht zur Lenkradachse ausgerichtet werden. Möglich ist auch die Ausbildung des Anschlußbleches als ein das Airbaggehäuse an seinem unteren Ende einfassendes Rohrblech. Dieses Rohblech ist dann mit dem Airbaggehäuse zu verbinden. Für den Anschluß an die Gummimembran kann es einen zu Lenkradachse gerichteten Absatz haben.

Um eventuellen Beschädigungen am Gasgenerator vorzubeugen, wird dessen Schwingbewegung begrenzt. Dieses kann durch an entsprechenden Stellen am Airbaggehäuse, am Gasgenerator und / oder Einsatz selbst angebrachte Anschläge erfolgen, die insbesondere mit den Enden der Gummimembran zusammen wirken.

### Kurzbeschreibung der Zeichnung

Anhand der nachstehenden Zeichnung wird die Erfindung näher erläutert.

Es zeigt:
- Fig. 1: ein Airbaggehäuse mit Gasgenerator und einem Einsatz mit nach unten sich erweiternder kegelstumpfförmigen Gummimembran und
- Fig. 2: das Airbaggehäuse mit Gasgenerator und Einsatz mit einer nach oben sich erweiternden kegelstumpfförmigen Gummimembran.

### Ausführung der Erfindung

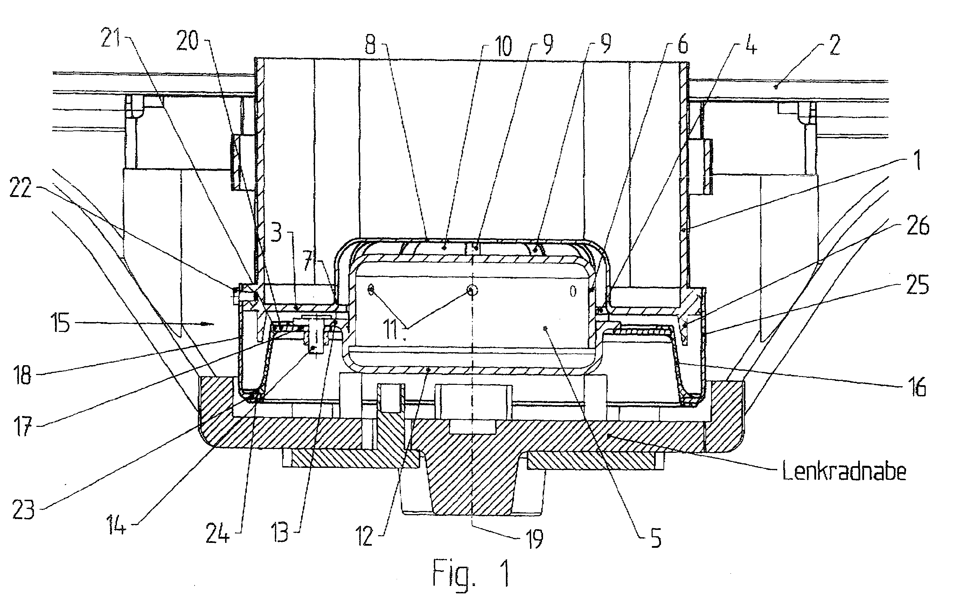

Das in der Fig. 1 gezeigte Airbaggehäuse 1 ist so ausgebildet, das es in seinem Inneren einen Airbag aufnehmen kann und von seinem Äußeren her in eine Aufnahmeöffnung eines nur mit seinem Umrissen angedeuteten Kraftfahrzeuglenkrades 2 eingefügt werden kann. Im Boden 3 des Airbaggehäuses 1 ist die Öffnung 4 vorgesehen, in die der Airbaggasgenerator 5 eingefügt ist. Damit der Gasgenerator seine Funktion als Schwingungstilger erfüllen kann, ist die Öffnung 4 größer gehalten, als der Durchmesser des Gasgenerators. Zwischen der Außenwand 6 des Gasgenerators 5 und dem Rand 7 der Öffnung 4 ist folglich ein für die Schwingungen des Gasgenerators 5 ausreichender Abstand vorhanden. Damit der Gasgenerators 5 bei seinen Schwingbewegungen den Airbag nicht beschädigt und die Schwingbewegung des Gasgenerators 5 durch den eingefalteten Airbag nicht behindert werden, ist er von einem Käfig 8 eingefaßt. Der Käfig 8 besteht aus einzelnen Rippen 9 mit den Freiräumen 10, durch welche das Gas in den Airbag einströmen kann. In der Wand 6 des Gasgenerators 5 sind die Öffnungen 11 für den Gasaustritt aus dem Gasgenerator 5 angebracht. Von der Unterseite her ist der Gasgenerator 5 durch einen topfartigen Boden 12 abgeschlossen, dessen rundumlaufender Rand als Befestigungsflansch 13 ausgebildet ist. Im Befestigungsflansch 13 sind mehrere Öffnungen für Schraubverbindungen 14 vorgesehen, über die der Gasgenerator 5 mit dem Einsatz 15 verbunden werden kann. Der Einsatz 15 besteht im wesentlichen aus der ringförmigen Gummimembran 16, dem Adapterelement 17 und dem Anschlußblech 18. Gummimembran 16, Adapterelement 17 und Anschlußblech 18 sind durch Vulkanisieren miteinander verbunden. Die Gummimembran 16 ist ringförmig ausgebildet und verläuft längs zur Lenkradachse 19. Die konstruktive Gestaltung und Ausrichtung von Adapterelement 17 und Anschlußblech 18 richtet sich nach den im Lenkrad gegebenen konstruktiven Verhältnissen und den am Gasgenerator 5 und auch am Airbaggehäuse 1 vorhandenen Anschlußmöglichkeiten. Im Ausführungsbeispiel ist das Adapterelement 17 mit Öffnungen versehen, die mit den Öffnungen des Befestigungsflansches 13 korrespondieren, so daß die Befestigungsschrauben 14 eingesetzt werden können. Mit seinem äußeren Rand 20 ist das Adapterelement 17 an dem oberen Ende 21 der Gummimembran 16 anvulkanisiert. Das Anschlußblech 18 ist an das Airbaggehäuse 1 über die Schrauben 22 angeschraubt. Das Anschlußblech 18 faßt das Airbaggehäuse 1 ein und hat die Form eines Rohrblechs. An seinem unteren Ende hat das Anschlußblech 18 einen zur Lenkradachse 19 gerichteten Absatz 23, an dem das untere Ende 24 der Gummimembran 16 anvulkanisiert ist. Die Gummimembran 16 ist kegelstumpfförmig ausgebildet und der größere Durchmesser des Kegelstumpfes weist nach unten. Der Einsatz 15 aus Rohrblech 25, Gummimembran 16 und Adapterelement 17 ist so ausgebildet, und am Airbaggehäuse 1 und Gasgenerator 5 befestigt, daß nach außen ein gasdichter Abschluß entsteht. Die im Gasgenerator 5 bei seiner Auslösung entstehenden Gase können nicht nach außen entweichen.

Damit ungewollte, übergroße Schwingungen des Gasgenerators 5 nicht zu seiner Zerstörung und eventuellen Auslösung führen, sind am Airbaggehäuse 1 Anschläge 26 vorgesehen, welche die Schwingbewegung des Gasgenerator 5 begrenzen. An diese Anschläge 26 schlägt das obere Ende 21 der Gummimembran 16 an, wenn ein zu starker Ausschlag des Gasgenerator 5 entsteht. Die Anschläge 26 sind am Boden 3 des Airbaggehäuses 1 angebracht. Sie können einen umlaufenden Rand bilden oder auch in Form einzelner Zähne vorhanden sein.

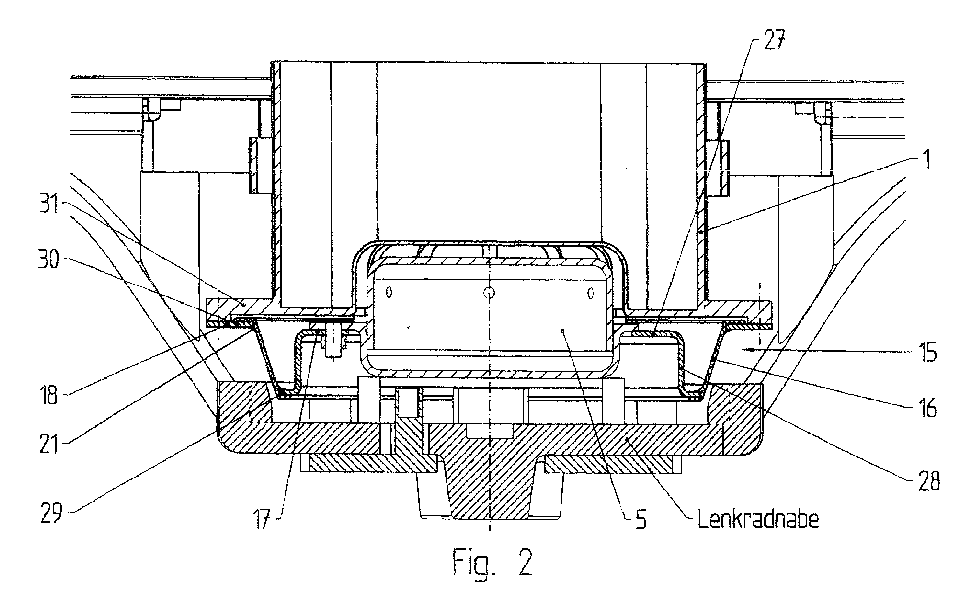

Die Ausführungsform nach der Fig. 2 entspricht in ihrem grundsätzlichen Aufbau der Ausführungsform nach Fig. 1. soweit das Airbaggehäuse 1 und der Gasgenerator 5 betroffen sind. Anders ist der Einsatz 15 ausgebildet. Das Adapterelement 17 hat zwar entsprechend der Ausführungsform nach Fig. 1 einen Ringflansch 27, der senkrecht zur Lenkradachse 19 ausgerichtet ist. Zusätzlich ist der Ringflansch 27 jedoch mit einem umlaufenden rohrartigen Ansatz 28 versehen, der einen radial nach außen vorstehenden Rand 29 hat. Mit diesem Rand 29 ist das untere Ende 24 der Gummimembran 16 durch Vulkanisation verbunden. Das obere Ende 21 der Gummimembran 16 schließt an das Anschlußblech 18 an. Das Anschlußblech 18 ist als ein senkrecht zur Lenkradachse 19 ausgerichteter Ringflansch 30 ausgebildet. Am Airbaggehäuse 1 ist ein rundumlaufender Befestigungsflansch 31 angebracht, an den der Ringflansch 30 angeschraubt wird. Die Verbindung zwischen Gasgenerator 5 und dem Adapterelement 17 wird ebenfalls durch Schrauben durchgeführt. In diesem Beispiel bildet die Gummimembran 16 einen oben weiter geöffneten Kegelstumpf.

## Patentansprüche

1. Airbaggehäuse in einem Kraftfahrzeuglenkrad mit einem als Lenkrad-Schwingungstilger wirkenden Airbag-Gasgenerator, dadurch gekennzeichnet, daß der Gasgenerator (5) mit dem Airbaggehäuse (1) gasdicht über einen Einsatz (15) mit einer längs der Lenkradachse (19) verlaufenden ringförmigen Gummimembran (16) verbunden ist.

2. Airbaggehäuse nach Anspruch 1, dadurch gekennzeichnet, daß der Einsatz (15) aus einem am Befestigungsflansch (13) des Generatorgehäuses (6) ansetzbaren Adapterelement (17), das mit seinem äußeren Rand (20) an einem Ende (21) der Gummimembran (16) anschließt und einem an das Airbaggehäuse (1) anfügbaren Anschlußblech (18), das mit seinem inneren Rand (23) an das andere Ende (24) der Gummimembran (16) angreift, besteht.

3. Airbaggehäuse nach Anspruch 1 oder 2, dadurch gekennzeichnet, daß das Adapterelement (17) durch einen senkrecht zur Lenkradachse (19) ausgerichteten Ringflansch (27) gebildet ist.

4. Airbaggehäuse nach Anspruch 3, dadurch gekennzeichnet, daß der Ringflansch (27) einen umlaufenden rohrartigen Ansatz (28) mit einem radial nach außen vorstehenden Rand (29) hat.

5. Airbaggehäuse nach Anspruch 1 bis 4, dadurch gekennzeichnet, daß das Anschlußblech (18) ein senkrecht zur Lenkradachse (19) ausgerichteter Ringflansch (30) ist.

6. Airbaggehäuse nach Anspruch 1 bis 3, dadurch gekennzeichnet, daß das Anschlußblech (18) ein das Airbaggehäuse (1) an seinem unteren Ende einfassendes Rohrblech (25) ist.

7. Airbaggehäuse nach Anspruch 6, dadurch gekennzeichnet, daß das Rohrblech (25) einen zur Lenkradachse (19) gerichteten Absatz (23) hat.

8. Airbaggehäuse nach Anspruch 1 bis 7, dadurch gekennzeichnet, daß die Verbindung zwischen dem Einsatz (15) und dem Gasgenerator (5) und / oder dem Airbaggehäuse (1) lösbar ist.

9. Airbaggehäuse nach Anspruch 1 bis 8, dadurch gekennzeichnet, daß das Airbaggehäuse (1) mit einem Anschlußflansch (13) versehen ist.

10. Airbaggehäuse nach Anspruch 1 bis 9, dadurch gekennzeichnet, daß die Gummimembran (16) kegelstumpfförmig ausgebildet ist.

11. Airbaggehäuse nach Anspruch 1 bis 10, dadurch gekennzeichnet, daß am Airbaggehäuse (1) und / oder am Gasgenerator (5) und / oder am Einsatz (15) Anschläge (26) angebracht sind, an welche die Gummimembran (16) insbesondere deren Enden (21, 24) die Schwingbewegung des Gasgenerator (5) begrenzend zur Anlage kommt.
